# EUROPEAN PATENT APPLICATION

(11) **EP 2 277 766 A1**
(43) Date of publication of application: **26.01.2011**
(21) Application number: 10155394.9
(22) Date of filing: 03.03.2010
(51) Int. Cl.: B62D 61/12, B62D 49/06, A01D 34/86, A01D 67/00, B60K 7/00, B60K 6/20, A01B 63/24, A01B 63/32

(54) **Tools-carrier for road-maintenance vehicle applicable to a broad range of vehicles**

(30) Priority: 18.03.2009 IT MI20090415
(71) Applicant: Bonetti S.R.L., 20060 Vignate (MI) (IT)
(72) Inventor: Bonetti, Alberto, 20060, Vignate MI (IT); Bonetti, Enrico, 20060, Vignate MI (IT); Bonetti, Maurizio, 20060, Vignate MI (IT)
(74) Representative: Modiano, Micaela Nadia

(57) **Abstract**

A vehicle-mountable assembly that can be mated with vehicles in general to enhance their functionality, comprising a supporting frame (2) that can be mated with a vehicle (4) in general, the supporting frame (2) supports traction wheels (10) which are connected to motor means (11) for the translational motion of the vehicle, the wheels (10) being movable from a work position, in which the traction wheels touch the ground, to an inactive position in which the traction wheels (10) are raised, and/or vice versa.

## Description

The present invention relates to a vehicle-mountable assembly that can be applied to vehicles in general to enhance their functionality.

As is known, for being able to perform road maintenance for executing, for example, cutting the grass at the edge of the road, cleaning the bollards, cleaning the guardrail, spraying the white lines, cleaning the tunnels, etc., mostly equipment is currently used that requires the use of specialized vehicles.

Mainly, farm tractors and the like or special industrial trucks are used to support the different pieces of equipment.

The farm tractor has very particular technical characteristics, with a rigid structure and with the possibility of having a wide range of speed gears; thereby it is the vehicle that is most adapted for using such specific pieces of equipment, but there are strong limitations to using this means, in particular the limitation of its circulation on high speed roads, such as highways and the like.

The industrial vehicles equipped with specific road maintenance apparatuses require particular structural characteristics including, for example, the stiffening of the suspensions and the necessity of having particular mechanical and hydraulic transmissions, so as to control the low speeds.

Another problem consists in that such industrial vehicles have large dimensions, high total weights and, usually, can only be used by people provided with professional driver's licenses.

The aim of the invention is to solve the above-mentioned problems, by providing a vehicle-mountable assembly that can be applied to a broad range of vehicles with small dimensions, which have the possibility of having a suitable speed for moving around and for the work, as well as being able to move quickly on roads and highways.

Within this aim, an object of the invention is to provide a vehicle-mountable assembly that allows for the vehicle to which it is applied to maintain an excellent stability, even in the case of equipment with masses beyond the axle.

Another object of the present invention is to provide a vehicle-mountable assembly that is particularly flexible and versatile, with the possibility of being applied to vehicles in general, thus substantially lowering the necessary investments.

Another object of the present invention is to provide a vehicle-mountable assembly that, thanks to its particular features, is able to guarantee highest reliability and safety during use and that is also competitive from a merely economical point of view.

This aim and these and other objects that will become better apparent hereinafter, are achieved by a vehicle-mountable assembly that can be applied to vehicles in general to increase their functionality, **characterized in that** it comprises a supporting frame that can be mated with a vehicle in general, the supporting frame supporting traction wheels which are connected to motor means for the translational motion of the vehicle and being movable from a working position, in which the traction wheels touch the ground, to an inactive position, in which the traction wheels are raised, and/or vice versa.

Further characteristics and advantages of the present invention will become better apparent from the description of a preferred but not exclusive embodiment of a vehicle-mountable assembly that can be applied to vehicles in general to increase their functionality, illustrated by way of a non-limiting example in the accompanying drawings wherein:

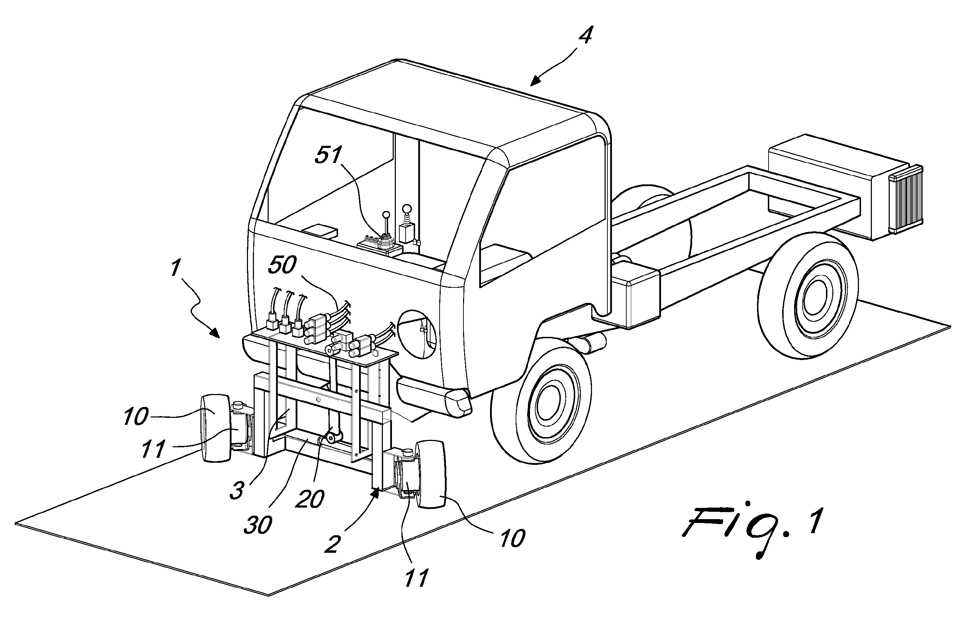

Figure 1 is a schematic perspective view of the vehicle-mountable assembly for road maintenance applied to a vehicle in general;

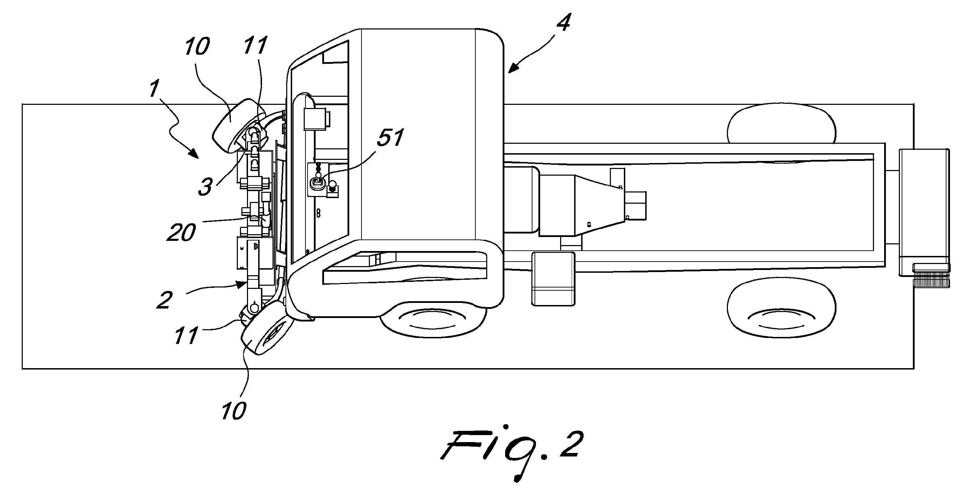

Figure 2 is a plan view from above of the vehicle-mountable assembly that can be applied to the vehicle;
Figure 3 is a perspective view of the vehicle-mountable assembly with one of the possible pieces of equipment for road maintenance that can be applied, indicated by the dotted line;
Figure 4 is a side elevation view of the vehicle-mountable assembly that is applied to the vehicle, with a piece of equipment for road maintenance connected thereto.

With reference to the figures, the vehicle-mountable assembly that can be applied to vehicles in general to increase their functionality, globally designated with the reference numeral 1, comprises a supporting frame 2 that can be mated with an engagement framework 3 connected to a vehicle 4 that, advantageously, has very small dimensions.

An important particularity of the invention consists in that the supporting frame 2 is connected to traction wheels 10 which are connected to motor means, in such a way as to directly carry out the translational motion of the vehicle.

In a possible embodiment, which is to be understood as in no way binding, the traction wheels 10 are connected to hydraulic traction motors 11 that are arranged on the axle of the wheels and are connected to a hydraulic power unit that can be directly activated by the engine of the vehicle 4 or optionally by another motor that is connected to the vehicle.

The hydraulic units can be quickly engaged for the connection of the supporting frame, which is mountable in that it can be optionally removed from the vehicle.

The supporting frame 2 is associated with positioning means that allow for the supporting frame to be put into a working position, in which the traction wheels 10 touch the ground, and in an inactive position in which the traction wheels 10 are raised with respect to the ground.

For this purpose, in a merely exemplifying embodiment, a lifting cylinder 20 is provided that operates between the engagement framework 3 and the supporting frame 2.

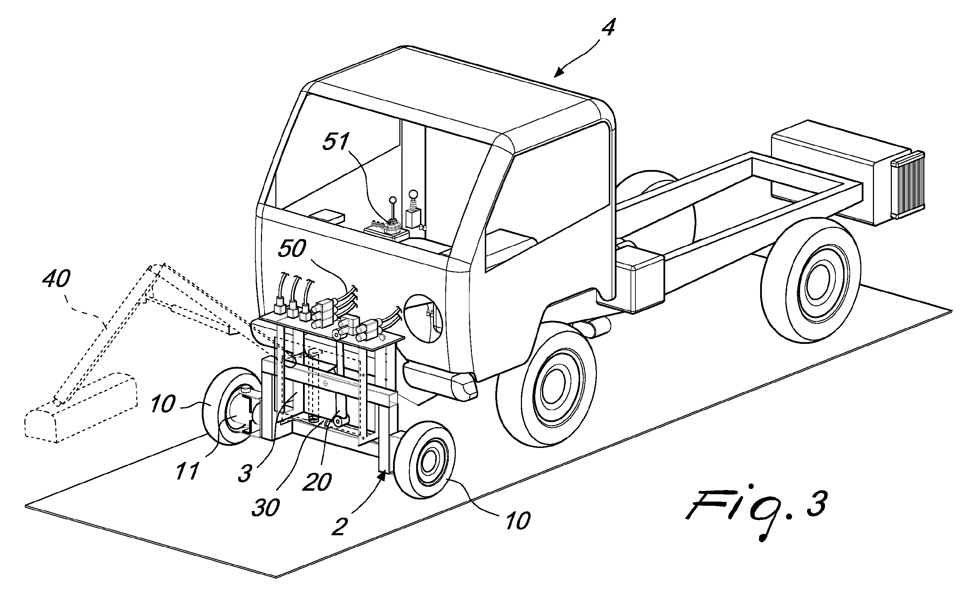

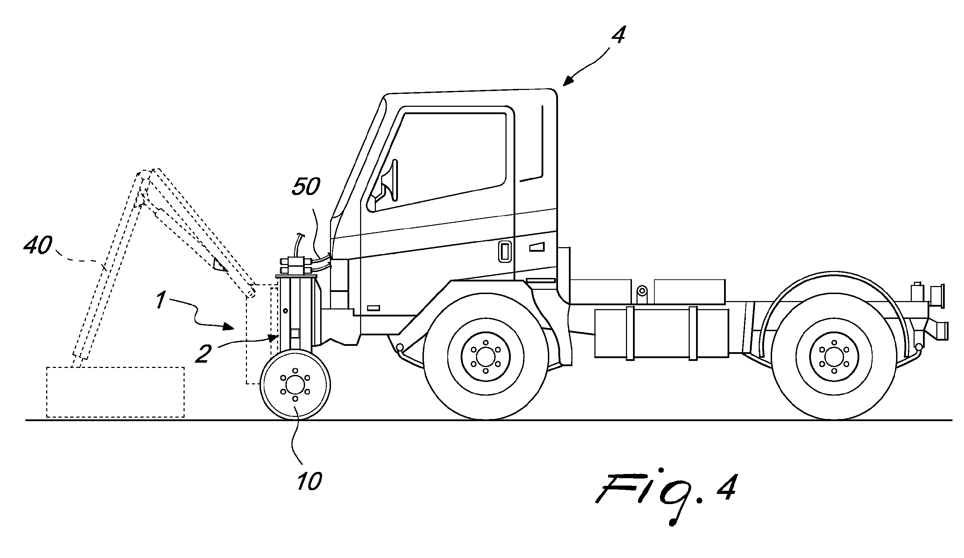

Moreover, a cylinder 30 for steering the wheels is provided on the supporting frame 2 and all the elements for the connection of optional road maintenance equipment can be provided, which are generally designated by the numeral 40 in Figures 3 and 4, and that merely as an example, are constituted by an assembly for cutting grass.

The supporting frame 2 can be arranged in front of the vehicle, as illustrated in the figures, or optionally at the rear of the vehicle or in a position that is interposed between the first and the last axle of the vehicle.

One of the characteristics consists in that the traction wheels have specific motor means that allow, under normal conditions, for the translational motion of the vehicle to be obtained without using the engine of the vehicle, for example, by using an electrical power source for the traction wheels. Moreover, during the use of the different apparatuses, it is possible to also provide the movement of the vehicle, for which it is not necessary to perform particular modifications of the vehicle, since the work speed, during the use of the different apparatuses, is set directly by the motor means provided on the vehicle-mountable assembly.

The assembly can be powered by different energy sources depending on the use, and beyond the hydraulic power mentioned in the previous example, it is possible to use auxiliary internal combustion engines, electrical motors, or other energy sources.

Moreover, it is possible to provide hydraulic connections, generally designated with the numeral 50, that can be controlled directly by control levers 51 arranged inside the cab of the vehicle, thus having the possibility to maneuver the attached apparatus, as well as the vehicle-mountable assembly, while staying inside the vehicle or, optionally, it is also possible to use a remote control, without requiring the presence of an operator on board the vehicle.

From what has been described it can be seen that the invention achieves the intended aim and objects, and in particular the fact is stressed that a vehicle-mountable assembly is provided that, having its own means for translational motion, can be easily connected to a normal vehicle to provide the translational motion, under particular conditions; it further offers the possibility of executing all the road maintenance operations without having to make particular modifications to the vehicle, since the work speed, as well as the support, possibly overhanging, of the different pieces of work equipment is in practice entrusted to the supporting frame which touch directly the ground and that allows optimum setting of the work speed.

The invention thus conceived is susceptible of numerous modifications and variations, all of which are within the scope of the appended claims.

Moreover, all the details may be replaced with other technically equivalent elements.

In practice, the materials employed, as long as they are compatible with the specific use, as well as the dimensions and the contingent shapes may be any according to requirements.

The disclosures in Italian Patent Application No. MI2009A000415 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vehicle-mountable assembly that can be applied to vehicles in general to enhance their functionality, **characterized in that** it comprises a supporting frame (2) that can be mated with a vehicle (4) in general, said supporting frame (2) supporting traction wheels (10) which are connected to motor means (11) for the translational motion of said vehicle (4) and being movable from a working position, in which said traction wheels (10) touch the ground, to an inactive position, in which said traction wheels (10) are raised, and/or vice versa.

2. The vehicle-mountable assembly according to the preceding claim, **characterized in that** said supporting frame (2) is arranged in front of said vehicle (4).

3. The vehicle-mountable assembly according to one or more of the preceding claims, **characterized in that** said supporting frame (2) is arranged at the rear of said vehicle (4).

4. The vehicle-mountable assembly according to one or more of the preceding claims, **characterized in that** said supporting frame (2) is arranged between the axles of said vehicle (4).

5. The vehicle-mountable assembly according to one or more of the preceding claims, **characterized in that** said motor means (11) are functionally connected to the engine of said vehicle (4).

6. The vehicle-mountable assembly according to one or more of the preceding claims, **characterized in that** said motor means (11) are functionally connected to an auxiliary motor that is associated with said vehicle (4).

7. The vehicle-mountable assembly according to one or more of the preceding claims, **characterized in that** it comprises means (20) for positioning said supporting frame, in said working position and in said inactive position, which consist in a lifting cylinder that operates between the engagement framework (3) for supporting said supporting frame (2) and said supporting frame (2).

8. The vehicle-mountable assembly according to one or more of the preceding claims, **characterized in that** it comprises steerable means (30) for said traction wheels (10).

9. The vehicle-mountable assembly according to one or more of the preceding claims, **characterized in that** it comprises a road maintenance apparatus (40) associated with said supporting frame (2).

10. The vehicle-mountable assembly according to one or more of the preceding claims, **characterized in that** said motor means (11), said positioning means (20), said steerable means (30) and said at least one apparatus (40) can be controlled from the inside of the cab of said vehicle (4) and/or remotely without an operator on board said vehicle (4).
